# EUROPÄISCHE PATENTSCHRIFT

(11) **EP 2 522 617 B1**
(45) Veröffentlichungstag und Bekanntmachung des Hinweises auf die Patenterteilung: **19.03.2014**
(21) Anmeldenummer: 11166067.6
(22) Anmeldetag: 13.05.2011
(51) Int. Cl.: B66C 11/20, B66C 21/00, B66C 17/00

(54) **Vorrichtung und Verfahren zur Förderung von Stückgut und/oder Schüttgut**
Method and device for conveying bulk material and/or freight
Dispositif et procédé de transport de marchandises à la pièce et/ou marchandises au détail

(43) Veröffentlichungstag der Anmeldung: 14.11.2012
(73) Patentinhaber: Bühler AG, 9240 Uzwil (CH)
(72) Erfinder: Haymoz, Robert, 9240, Uzwil (CH)
(74) Vertreter: Hepp Wenger Ryffel AG

(56) Entgegenhaltungen:
- DE-A1- 1 556 023
- DE-B- 1 280 153
- NL-A- 6 514 508
- US-A- 3 834 552

## Beschreibung

Die vorliegende Erfindung betrifft das Gebiet der Förderung von Stückgut und/oder Schüttgut aus und/oder in eine Transportvorrichtung mit den Merkmalen der Oberbegriffe der unabhängigen Ansprüche.

Aus der DE 12 80 153 ist eine Umschlaganlage für Hafenanlagen mit einem auf einem Portalgerüst drehbar angeordneten Oberbau bekannt. Am Oberbau ist ein Klappausleger angeordnet, auf dem eine Greifer-Laufkatze läuft, wobei die Triebwerke wie beispielsweise das Seilwindwerk und das Haltehubwerk in einem Maschinenhaus untergebracht sind. Mittels eines aus dem Maschinenhaus kommenden Halteseils ist der Greifer vertikal bewegbar.

Aus der DE 195 30 112 A1 ist ein Verfahren und eine Vorrichtung zum Beladen oder Entladen eines Schiffes bekannt. Hier wird beispielsweise bei kontinuierlichen Schiffsentladern ein Kran mit einem so genannten "Marine-Leg" in den Beladebereich bzw. Entladebereich des Schiffes positioniert, um dort Fördergut abzulegen oder aufzunehmen.

Derartige Vorrichtungen zum kontinuierlichen Beladen und Entladen sind beispielsweise auch von der Firma Bühler bekannt.

Derartige Vorrichtungen weisen jedoch unter gewissen Umständen den Nachteil auf, dass die Positionierung der Vorrichtung zur Beladung bzw. Entladung nicht mit ausreichend hoher Geschwindigkeit erfolgen kann, da oft grosse Massen bewegt werden müssen. Zudem sind aufgrund der zu bewegenden Massen starke Antriebe an der Vorrichtung notwendig sind, um die entsprechende Fördereinrichtung zu positionieren. Derartige Antriebe sind im Allgemeinen kostspieliger und verbrauchen zudem im Betrieb mehr Energie.

Aus der WO 00/21826 A1 ist eine Anlage zum Löschen und Beladen von Schiffen mittels genormter Plattformen bekannt. Hierbei werden grosse Lasten mit Hilfe von Gegengewichten auf ein Schiff gefördert bzw. von diesem weggefördert.

Diese Vorrichtung hat jedoch den Nachteil, dass damit schwer Zugang zu Schiffsladungen im Inneren eines Schiffs möglich ist und zudem Schüttgüter nicht ohne weiteres entladen oder beladen werden können.

Es ist daher eine Aufgabe der vorliegenden Erfindung, die Nachteile des Bekannten zu vermeiden, insbesondere also eine Vorrichtung und ein Verfahren bereitzustellen, mit denen eine Transportvorrichtung und insbesondere ein Schiff mit Stückgütern und/oder Schüttgütern beladen und entladen werden kann, wobei die Fördereinrichtung eine zuverlässige und sichere Positionierung relativ zur Transportvorrichtung erlaubt und zudem keine starken Antriebe zur Positionierung der Fördereinrichtung notwendig sind. Eine weitere Aufgabe der vorliegenden Erfindung ist die Bereitstellung einer Vorrichtung und eines Verfahrens, mit denen eine Transportvorrichtung kostengünstig und energetisch günstig beladen und entladen werden kann.

Diese Aufgaben werden durch eine Vorrichtung sowie ein Verfahren gemäss den unabhängigen Ansprüchen gelöst.

Die erfindungsgemässe Vorrichtung zur Förderung von Stückgut und/oder Schüttgut aus und/oder in eine Transportvorrichtung, insbesondere ein Schiff, umfasst einen Ausleger. Dieser Ausleger weist eine zumindest im Wesentlichen vertikal beweglich gelagerte Fördereinrichtung zur Förderung des Stückguts und/oder des Schüttguts und eine Kraftübertragungseinrichtung auf. Die Vorrichtung weist eine erste Befestigungsvorrichtung und eine zweite Befestigungsvorrichtung und / oder zumindest eine erste und eine zweite Kraftumlenkungseinrichtung oder beliebige Kombinationen daraus für die Kraftübertragungseinrichtung auf. Die Fördereinrichtung und der Antrieb sind bei bestimmungsgemässem Gebrauch bezogen auf zumindest eine entlang der Kraftübertragungseinrichtung definierte Richtung zwischen der ersten Befestigungsvorrichtung und der zweiten Befestigungsvorrichtung und / oder zwischen der ersten und der zweiten Kraftumlenkungseinrichtung oder beliebige Kombinationen daraus angeordnet. Die erste Befestigungsvorrichtung ist insbesondere am Ausleger angeordnet. Die Kraftübertragungseinrichtung ist derart ausgebildet, dass zumindest mittels des Antriebs die Fördereinrichtung im Wesentlichen vertikal bewegbar ist.

Unter der Formulierung "Stückgut und/oder Schüttgut" wird im Sinne der vorliegenden Anmeldung die Förderung von Stückgut und Schüttgut, lediglich von Stückgut oder lediglich von Schüttgut verstanden. Im Sinne der vorliegenden Anmeldung wird diese Interpretation der mit der "und/oder"-Formulierung umfassten Varianten von hier an und im Folgenden verstanden.

Die Formulierung "eine erste Befestigungsvorrichtung und eine zweite Befestigungsvorrichtung und / oder zumindest eine erste und eine zweite Kraftumlenkungseinrichtung oder beliebige Kombinationen daraus" bedeutet im Sinne der vorliegenden Anmeldung, dass die Vorrichtung eine der folgenden Kombinationen aufweist: eine erste Befestigungsvorrichtung und eine zweite Befestigungsvorrichtung; eine erste Befestigungsvorrichtung und eine zweite Befestigungsvorrichtung und zumindest eine erste und eine zweite Kraftumlenkungseinrichtung; eine erste Befestigungsvorrichtung und zumindest eine erste und eine zweite Kraftumlenkungseinrichtung; eine erste Befestigungsvorrichtung und eine zweite Befestigungsvorrichtung und zumindest eine erste Kraftumlenkungseinrichtung.

Die Formulierung "vertikal" bedeutet im Sinne der vorliegenden Anmeldung die Richtung, die parallel zur Wirkung der Gravitation ist. Unter dem Begriff "horizontal" wird im Sinne der vorliegenden Anmeldung die Richtung verstanden, die senkrecht auf der Gravitationswirkungsrichtung steht.

Unter der Formulierung "im Wesentlichen vertikal" wird im Sinne der vorliegenden Anmeldung ein Winkel von ±20° zur vertikalen Richtung, bevorzugt von ±10° und ganz besonders bevorzugt von ±5° verstanden.

Unter einer Kraftübertragungseinrichtung wird im Sinne der vorliegenden Anmeldung jede Einrichtung verstanden, die eine Kraft übertragen kann, wie beispielsweise Ketten, Gestänge, Kabel oder Seile oder Kombinationen daraus, wobei diese Aufzählung nicht abschliessend ist.

Unter einer ersten und / oder einer zweiten Befestigungsvorrichtung für die Kraftübertragungseinrichtung wird im Sinne der vorliegenden Anmeldung jedwede Vorrichtung verstanden, mit der sich eine Kraftübertragungseinrichtung an einer Vorrichtung wie beispielsweise einem Ausleger befestigen lässt. Hierbei kann es sich beispielsweise um Verschraubungen, Haken, Knoten oder auch Verklebungen handeln. Die erste und / oder zweite Befestigungsvorrichtung kann beispielsweise auch als Winde zur Längenanpassung der Kraftübertragungseinrichtung ausgebildet sein, insbesondere auch mit einer Einrichtung zur Kraftausübung entlang der Kraftübertragungseinrichtung und / oder einer Einrichtung zur Arretierung der Länge der Kraftübertragungseinrichtung.

Unter einer Kraftumlenkungseinrichtung wird im Sinne der vorliegenden Anmeldung eine Einrichtung zur Umlenkung einer Kraft verstanden, insbesondere eine Umlenkrolle.

Insbesondere können die erste Befestigungsvorrichtung und die zweite Befestigungsvorrichtung in jeweils einem Befestigungsgehäuse oder in einem gemeinsamen Befestigungsgehäuse angeordnet sein.

Insbesondere können die erste Befestigungsvorrichtung und die zweite Befestigungsvorrichtung als genau eine gemeinsame Befestigungsvorrichtung für die insbesondere schlaufenförmige Kraftübertragungseinrichtung ausgebildet sein. Mit anderen Worten sind also zwei Enden der Kraftübertragungseinrichtung an der genau einen gemeinsamen Befestigungseinrichtung befestigbar, so dass eine schlaufenförmige Kraftübertragungseinrichtung gebildet wird.

Unter einer entlang der Kraftübertragungseinrichtung definierten Richtung wird eine Richtung im Wesentlichen kongruent zur Kraftübertragungseinrichtung verstanden.

Im Sinne der vorliegenden Anmeldung ist ein Antrieb, der an der Fördereinrichtung angeordnet und nicht mit der Kraftübertragungseinrichtung verbunden ist, entlang der durch die Kraftübertragungseinrichtung definierten Richtung zwischen der ersten Befestigungsvorrichtung und der zweiten Befestigungsvorrichtung angeordnet.

Der Antrieb kann beispielsweise als Elektroantrieb, Verbrennungsmotor oder auch als Hydraulikantrieb ausgestaltet sein.

Unter dem Begriff "Stückgut"wird im Sinne der vorliegenden Anmeldung dasjenige Gut verstanden, was sich am Stück transportieren lässt, wie beispielsweise Gebinde, Kisten, Paletten oder auch Schiffscontainer.

Unter dem Begriff "Schüttgut" wird im Sinne der vorliegenden Anmeldung ein körniges oder auch stückiges Gut verstanden, das in einer schüttfähigen Form vorliegt und insbesondere fliessfähig ist und/oder beispielsweise mittels Schneckenfördern förderbar ist.

Die erfindungsgemässe Vorrichtung weist nun den Vorteil auf, dass mit dieser Stückgüter und/oder Schüttgüter aus und/oder in eine Transportvorrichtung gefördert werden können. Zudem erlaubt die Art der Anordnung von Fördereinrichtung, Befestigungsvorrichtungen, Kraftübertragungseinrichtung sowie des Antriebs eine hohe Flexibilität und genaue und schnelle Positionierbarkeit der Fördereinrichtung, um auch beispielsweise schwierig zugängliche Schiffsladeräume zu erreichen, um diese effizient zu beladen und/oder zu entladen.

Beispielsweise ist es vorteilhaft, dass bei der Entladung eines Schiffes die erste Befestigungsvorrichtung für die Kraftübertragungseinrichtung auf der dem Schiff zugewandten Seite des Auslegers angeordnet ist und der mit dem Ausleger über die Kraftübertragungseinrichtung verbundene Antrieb auf der dem Schiff abgewandten Seite angeordnet ist. Dies führt dazu, dass die sperrigeren Teile der Vorrichtung wie beispielsweise der Antrieb die Beladung und/oder Entladung des Schiffes nicht behindern und zudem die Positionierung im Wesentlichen in vertikaler Richtung der Fördereinrichtung präzise erfolgen kann, da hier auch der Antrieb für die horizontale Bewegung der Fördereinrichtung entlang des Auslegers von der vertikalen Bewegung entkoppelt ist.

Bevorzugt ist die Kraftübertragungseinrichtung zumindest abschnittsweise als Flaschenzug ausgebildet.

Dies hat den Vorteil, dass lediglich beispielsweise Antriebe geringerer Stärke notwendig sind zum im Wesentlichen vertikalen Bewegen der Fördereinrichtung bei entsprechender Ausgestaltung des Flaschenzuges. Hierbei muss der Antrieb jedoch einen grösseren Hub erreichen als die maximal im Wesentlichen vertikale Bewegung der Fördereinrichtung.

Es ist mit der Ausgestaltung der Kraftübertragungseinrichtung zumindest abschnittsweise als Flaschenzug aber auch vorteilhaft möglich, den Flaschenzug so auszubilden, dass der Antrieb zur im Wesentlichen vertikalen Bewegung der Fördereinrichtung einen Hub aufweist, der kleiner als die im Wesentlichen vertikale Bewegung. Beispielsweise kann der Absolutwert des Hubs etwa 50 % des Absolutwerts der maximalen im Wesentlichen vertikalen Bewegung betragen. Dies hat den Vorteil, dass der Antrieb zwar als stärkerer Antrieb ausgebildet sein muss, der jedoch lediglich einen geringeren Hub erreichen muss, was den Antrieb kostengünstiger macht.

Unter dem "Hub" eines Antriebs wird im Sinne der vorliegenden Anmeldung die maximale Wegstrecke verstanden, um die der Antrieb direkt ein Element ohne eine weitere Kraftübertragungseinrichtung oder auch eine Kraftübersetzungsseinrichtung positionieren kann.

Bevorzugt ist die Kraftübertragungseinrichtung als zumindest ein Kabel, ein Seil, eine Kette oder Kombinationen daraus mit Führungselementen ausgebildet. Insbesondere weist die Kraftübertragungseinrichtung eine feste Länge auf. Die Kraftübertragungseinrichtung ist insbesondere einstückig ausgebildet, insbesondere aus Metall. Die Führungselemente sind insbesondere als Führungsrollen und/oder Umlenkrollen ausgebildet.

Im Sinne der vorliegenden Anmeldung wird beispielsweise unter einem einstückigen Kabel ein in Längsrichtung einstückiges Kabel verstanden. Im Sinne der vorliegenden Anmeldung ist ein Kabel, welches aus einer Vielzahl von Filamenten gebildet wird, ebenfalls ein einstückiges Kabel.

Diese Ausbildung der Kraftübertragungseinrichtung als zumindest ein Kabel, ein Seil, eine Kette oder Kombinationen daraus mit Führungselementen hat den Vorteil, dass die Kraftübertragungseinrichtung flexibel und Platz sparend ausgebildet ist und mittels Führungselementen einfach an die entsprechenden Anforderungen anpassbar ist. Zudem ist ein derartige Kraftübertragungseinrichtung günstig in der Herstellung und zuverlässig im Betrieb.

Besonders bevorzugt ist zumindest eine der folgenden Komponenten an und/oder in einem Gehäuse befestigt: Ausleger, Antrieb, erste Befestigungsvorrichtung, zweite Befestigungsvorrichtung, Kraftumlenkungseinrichtung(en).

Dies hat den Vorteil, dass die Vorrichtung flexibel in den Dimensionen auslegbar ist, um an die verschiedenen Transportvorrichtungen angepasst zu werden. Zudem können Teile der Vorrichtung an und/oder in diesem Gehäuse angeordnet werden.

Insbesondere sind der Antrieb und der Ausleger an und/oder in dem Gehäuse angeordnet.

Dies hat den Vorteil, dass der Antrieb benachbart zum Ausleger angeordnet ist und somit die Kraftübertragungseinrichtung wie beispielsweise das Kabel kurz ausgebildet sein kann, was kostengünstig ist und die Zuverlässigkeit erhöht.

Ganz besonders bevorzugt ist der Antrieb an und/oder in der Fördereinrichtung angeordnet.

Dies hat den Vorteil, dass durch diese Anordnung des Antriebs die Fördereinrichtung unter anderem direkt antreibbar ist, was die Positionierung der Fördereinrichtung schneller und präziser macht.

Erfindungsgemäß weist die Vorrichtung ein zumindest im Wesentlichen vertikal beweglich gelagertes Gegengewicht auf, welches mit dem Antrieb verbunden ist und / oder zwischen der ersten Befestigungsvorrichtung und der zweiten Befestigungsvorrichtung und / oder zwischen der ersten und der zweiten Kraftumlenkungseinrichtung oder beliebigen Kombinationen daraus angeordnet ist, wobei das Gegengewicht bei bestimmungsgemässen Gebrauch insbesondere im Wesentlichen vertikal entgegengesetzt zur Fördereinrichtung bewegbar ist. Mit anderen Worten ist der Antrieb so ausgelegt, dass dieser das Gegengewicht und / oder die Fördereinrichtung im Wesentlichen vertikal bewegt, wodurch mittels der Kraftübertragungseinrichtung die Fördereinrichtung und das Gegenwicht im Wesentlichen vertikal entgegengesetzt zueinander bewegt werden.

Dies hat den Vorteil, dass durch diese Ausgestaltung mit dem Gegengewicht lediglich ein schwächerer Antrieb zur Positionierung der Fördereinrichtung notwendig ist als ohne Gegengewicht. Dies macht die Vorrichtung in der Anschaffung und im Betrieb kostengünstiger gegenüber dem Stand der Technik und erlaubt eine präzisere und schnellere Positionierung der Fördereinrichtung relativ zum Schüttgut und/oder Stückgut. Beispielsweise kann dadurch eine im Wesentlichen schwebende Fördereinrichtung gebildet werden, deren Gewicht nicht auf einem Schiffsboden lastet, wodurch einerseits vertikale Ausgleichsbewegungen relativ zum Schiff verbessert werden und andererseits auch die Schwere von Kollisionen zwischen Schiff und Fördereinrichtung verringert wird.

Insbesondere ist das Gegengewicht bezogen auf die entlang der Kraftübertragungseinrichtung definierten Richtung zwischen der Fördereinrichtung und der zweiten Befestigungsvorrichtung angeordnet. Beispielsweise ist ein Antrieb, der an dem derart angeordneten Gegengewicht angeordnet und nicht mit der Kraftübertragungseinrichtung verbunden ist, entlang der durch die Kraftübertragungseinrichtung definierten Richtung im Sinne der vorliegenden Anmeldung zwischen der ersten Befestigungsvorrichtung und der zweiten Befestigungsvorrichtung und / oder zwischen der ersten und der zweiten Kraftumlenkungseinrichtung oder beliebigen Kombinationen daraus angeordnet.

Insbesondere werden also zumindest eine der folgenden Anordnungen bevorzugt: Anordnung des Antriebs an der Fördereinrichtung und des Gegengewichts zwischen der ersten Befestigungsvorrichtung und der zweiten Befestigungsvorrichtung und / oder zwischen der ersten und der zweiten Kraftumlenkungseinrichtung oder beliebigen Kombinationen daraus; Anordnung des Antriebs am Gegengewicht, welches zwischen der ersten Befestigungsvorrichtung und der zweiten Befestigungsvorrichtung und / oder zwischen der ersten und der zweiten Kraftumlenkungseinrichtung oder beliebigen Kombinationen daraus angeordnet ist.

Durch entsprechende Wahl der Kraftübertragungseinrichtung und Kraftumlenkungseinrichtungen kann beispielsweise eine Reibung derart einstellt werden, so dass die Fördereinrichtung das mittels des Gegengewichts in Verbindung mit der Reibung, insbesondere ohne weitere Kraftausübung mittels des Antriebs, in einer Position haltbar ist.

Das Gegengewicht weist insbesondere ein Gewicht im Bereich von 150% bis 250%, bevorzugt von 180% bis 220% und besonders bevorzugt von etwa 200 % der Fördereinrichtung auf. Das Gewicht der Fördereinrichtung wird bestimmt ohne Schüttgut und / oder Stückgut in der Fördereinrichtung.

Dies hat den Vorteil, dass durch die Ausgestaltung der Kraftübertragungseinrichtung und der Kraftumlenkungseinrichtungen beispielsweise als Flaschenzug lediglich ein Antrieb mit geringerem Hub als für die maximale im Wesentlichen vertikale Bewegung der Fördereinrichtung notwendig ist, falls der Flaschenzug entsprechend ausgestaltet ist. Ein derartiger Antrieb ist kostengünstiger im Vergleich zu beispielsweise einem Antrieb, der einen Hub aufweisen muss im Wesentlichen gleich der maximalen vertikalen Bewegung der Fördereinrichtung..

Besonders bevorzugt ist das Gegengewicht an und/oder in dem Gehäuse angeordnet und insbesondere in dem Gehäuse vertikal bewegbar.

Dies hat den Vorteil, dass keine weiteren Vorrichtungen zur Anordnung des Gegengewichts in der Vorrichtung notwendig werden und die Vorrichtung damit kostengünstiger wird. Die Anordnung des Gegengewichts in dem Gehäuse hat zudem den Vorteil, dass Witterungseinflüsse auf die Bewegung des Gegengewichts minimiert werden können.

Ganz besonders bevorzugt ist der Ausleger horizontal rotierbar und/oder vertikal schwenkbar.

Unter "rotierbar" wird im Sinne der vorliegenden Anmeldung eine Drehbarkeit um zumindest 180° oder Vielfache davon verstanden.

Unter dem Begriff "schwenkbar" wird im Sinne der vorliegenden Anmeldung eine Verschwenkbarkeit im Bereich von ±10° zur Richtung der Schwerkraft, bevorzugt von ±5° und ganz besonders bevorzugt von ±3° verstanden.

Bevorzugt ist die Fördereinrichtung entlang dem Ausleger positionierbar.

Dies hat den Vorteil der flexibleren Positionierung der Fördereinrichtung relativ zur Transportvorrichtung, die beladen und/oder entladen werden soll und insbesondere einer Entkopplung von horizontaler und vertikaler Positionierung der Fördereinrichtung, was diese präziser macht.

Besonders bevorzugt ist die Vorrichtung beweglich gelagert zur Positionierung der Vorrichtung relativ zur Transportvorrichtung.

Dies hat den Vorteil, dass die Vorrichtung und damit die Fördereinrichtung noch besser positioniert werden können relativ zur Transportvorrichtung und somit eine effizientere Beladung und/oder Entladung erreicht werden kann.

Besonders bevorzugt umfasst die Fördereinrichtung zumindest eine der folgenden Einrichtungen: Kettenförderer, Gurtförderer, Schneckenförderer, Becherförderer, Pneumatikförderer, Greifeinrichtung.

Bevorzug weist die Fördereinrichtung zumindest eine Förderschnecke zur Förderung von Schüttgut auf, welche insbesondere bei bestimmungsgemässen Gebrauch auf der der Transportvorrichtung zugewandten Seite angeordnet ist.

Beispielsweise ist beim Entladen und/oder Beladen die Förderschnecke zur Förderung von Schüttgut insbesondere auf der der Transportvorrichtung zugewandten Seite angeordnet. Mit anderen Worten befindet sich die Förderschnecke beim Entladen und/oder Beladen im Kontakt mit dem Schüttgut in der Transportvorrichtung.

Dies hat den Vorteil, dass insbesondere nicht selbst fliessfähiges Schüttgut zum Entladen der Transportvorrichtung mittels der Förderschnecke in die Fördereinrichtung gefördert werden kann. Auch beim Beladen einer Transportvorrichtung mit nicht selbst fliessfähigem Schuttgut kann die Verwendung einer derartigen Förderschnecke vorteilhaft sein, da das mit der Fördereinrichtung in die Transportvorrichtung geförderte Schüttgut mittels der Förderschnecke von der Fördereinrichtung weggefördert werden kann, so dass die Beladung der Transportvorrichtung effizienter erfolgen kann.

Besonders bevorzugt weist die Vorrichtung eine Förderleitung zur Abfuhr und/oder Zufuhr von Schüttgut in und/oder aus der Fördereinrichtung auf. Die Förderleitung ist insbesondere als teleskopische Leitung ausgebildet.

Dies hat den Vorteil, dass bei vertikaler Bewegung die Länge der Förderleitung anpassbar ist, so dass Schüttgut weiter zuführbar und/oder abführbar ist.

Beispielsweise kann in der Förderleitung eine Schnecke oder auch ein Kettenförderer zum Transport des Schüttguts entlang der Förderleitung angeordnet sein.

Unter dem Begriff "teleskopisch" wird im Sinne der vorliegenden Anmeldung eine in der Länge anpassbare Leitung verstanden.

Ganz besonders bevorzugt weist die Vorrichtung einen Förderer auf zur Abfuhr und/oder Zufuhr von Schüttgut in und/oder aus der Förderleitung. Dieser Förderer ist insbesondere entlang des Auslegers angeordnet zur Förderung von Schüttgut aus und/oder in die Vorrichtung.

Ein weiterer Aspekt der Erfindung ist gerichtet auf ein Verfahren zur Förderung von Stückgut und/oder Schüttgut aus und/oder in eine Transportvorrichtung. Dieses Verfahren wird insbesondere mittels einer Vorrichtung wie oben beschrieben durchgeführt. Das Verfahren umfasst den Schritt des Bereitstellens einer Vorrichtung, welche einen Ausleger mit einer zumindest im Wesentlichen vertikal beweglich gelagerten Fördereinrichtung zur Förderung des Stückguts und/oder des Schüttguts, einen Antrieb zur im Wesentlichen vertikalen Bewegung der Fördereinrichtung und eine Kraftübertragungseinrichtung umfasst. Die Vorrichtung weist eine erste Befestigungsvorrichtung und eine zweite Befestigungsvorrichtung und / oder zumindest eine erste und eine zweite Kraftumlenkungseinrichtung oder beliebige Kombinationen daraus für die Kraftübertragungseinrichtung auf. Bei bestimmungsgemässem Gebrauch sind die Fördereinrichtung und der Antrieb bezogen auf zumindest eine entlang der Kraftübertragungseinrichtung definierten Richtung zwischen der ersten Befestigungsvorrichtung und der zweiten Befestigungsvorrichtung und / oder zwischen der ersten und der zweiten Kraftumlenkungseinrichtung oder beliebige Kombinationen daraus angeordnet. Anschliessend an das Bereitstellen der Vorrichtung erfolgt ein Positionieren der Fördereinrichtung im Wesentlichen vertikal relativ zur Transportvorrichtung mittels des Antriebs. Anschliessend erfolgt ein Fördern von Schüttgut und/oder Stückgut aus und/oder in die Transportvorrichtung.

Dieses Verfahren wird im Wesentlichen mit der oben beschriebenen Vorrichtung durchgeführt und weist deshalb alle entsprechenden Vorteile auf.

Bevorzugt umfasst die Vorrichtung ein zumindest im Wesentlichen vertikal beweglich gelagertes Gegengewicht, welches mit dem Antrieb verbunden ist und / oder zwischen der ersten Befestigungsvorrichtung und der zweiten Befestigungsvorrichtung und / oder zwischen der ersten und der zweiten Kraftumlenkungseinrichtung oder beliebigen Kombinationen daraus angeordnet ist. Mittels des Antriebs wird das Gegengewicht bei bestimmungsgemässen Gebrauch im Wesentlichen vertikal entgegengesetzt zur Fördereinrichtung bewegt während der Positionierung der Fördereinrichtung.

Die Verwendung des Gegengewichts hat die oben zur Vorrichtung beschriebenen Vorteile.

Ein weiterer Aspekt der vorliegenden Erfindung ist gerichtet auf ein Verfahren zum Aufrüsten und/oder Umrüsten einer Vorrichtung zur Förderung von Stückgut und/oder Schüttgut aus und/oder in eine Transportvorrichtung zur Herstellung einer Vorrichtung wie oben beschrieben. Die Vorrichtung, die aufgerüstet und/oder umgerüstet werden soll, umfasst eine zumindest im Wesentlichen vertikal beweglich gelagerte Fördereinrichtung. Das Verfahren ist gekennzeichnet durch das Installieren einer Kraftübertragungseinrichtung. Zudem wird optional ein Antrieb installiert zur Verbindung mit der Kraftübertragungseinrichtung, falls die Vorrichtung noch keinen Antrieb aufweist, der zur Verbindung mit der Kraftübertragungseinrichtung geeignet ist, um die oben beschriebene Vorrichtung herzustellen. Weiterhin erfolgt ein Installieren einer ersten und zweiten Befestigungsvorrichtung und / oder der ersten und der zweiten Kraftumlenkungseinrichtung oder beliebigen Kombinationen daraus. Die bis hierher aufgeführten Schritte können in beliebiger Reihenfolge durchgeführt werden. Anschliessend erfolgt ein Verbinden der Kraftübertragungseinrichtung mit dem installierten oder einem bereits vorhandenen Antrieb, der ersten und zweiten Befestigungsvorrichtung und / oder der ersten und der zweiten Kraftumlenkungseinrichtung oder beliebigen Kombinationen daraus und der Fördereinrichtung. Dieses Verbinden kann in beliebiger Reihenfolge erfolgen. Die Verbindung der installierten Komponenten muss derart erfolgen, dass die Fördereinrichtung und der Antrieb bei bestimmungsgemässem Gebrauch bezogen auf zumindest eine entlang der Kraftübertragungseinrichtung definierte Richtung zwischen der ersten Befestigungsvorrichtung und der zweiten Befestigungsvorrichtung und / oder zwischen der ersten und der zweiten Kraftumlenkungseinrichtung oder beliebige Kombinationen daraus angeordnet sind, wobei die Fördereinrichtung zumindest mittels des Antriebs im Wesentlichen vertikal bewegbar ist.

Dieses Verfahren hat den Vorteil, dass bereits existierende Vorrichtungen aus dem Stand der Technik mittels dieses Verfahrens derart modifiziert werden können, um eine erfindungsgemässe Vorrichtung mit den oben beschriebenen Vorteilen zu erhalten.

Bevorzugt erfolgt das Installieren eines zumindest im Wesentlichen vertikal beweglich gelagerten Gegengewichts, welches dabei mit dem installierten oder dem bereits vorhandenen Antrieb verbunden und / oder zwischen der ersten Befestigungsvorrichtung und der zweiten Befestigungsvorrichtung und / oder zwischen der ersten und der zweiten Kraftumlenkungseinrichtung oder beliebigen Kombinationen daraus angeordnet wird.

Weitere Vorteile der erfindungsgemässen Vorrichtung und des erfindungsgemässen Verfahrens werden nachfolgend anhand von Figren und Ausführungsbeispielen zum besseren Verständnis näher erläutert, ohne die Erfindung auf diese zu beschränken. Es zeigen:
- Figur 1:: schematische Darstellung einer erfindungsgemässen Vorrichtung mit einer Fördereinrichtung in einer ersten Position;
- Figur 2:: schematische Darstellung der erfindungsgemässen Vorrichtung gemäss Figur 1 in einer zweiten Position;
- Figur 3:: schematische Darstellung einer alternativen, erfindungsgemässen Vorrichtung in einer ersten Position;
- Figur 4:: schematische Darstellung der alternativen, erfindungsgemässen Vorrichtung gemäss Figur 3 in einer zweiten Position mit Greifarm;
- Figur 5:: schematische Darstellung einer erfindungsgemässen Vorrichtung zur Beladung oder Entladung eines Schiffs;
- Figur 6:: schematische Darstellung einer Vorrichtung mit einer Fördereinrichtung in einer ersten Position ohne Gegengewicht;
- Figur 7:: schematische Darstellung der Vorrichtung gemäss Figur 6 in einer zweiten Position;
- Figur 8:: schematische Darstellung einer erfindungsgemässen Vorrichtung mit einem an einer Fördereinrichtung angeordneten Antrieb;
- Figur 9:: schematische Darstellung einer weiteren alternativen erfindungsgemässen Vorrichtung;
- Figur 10:: schematische Darstellung einer Vorrichtung ohne Gegengewicht;
- Figur 11:: schematische Darstellung einer alternativen erfindungsgemässen Vorrichtung mit Befestigungsgehäuse;
- Figur 12:: schematische Darstellung einer weiteren alternativen erfindungsgemässen Vorrichtung mit einer gemeinsamen Befestigungsvorrichtung;
- Figur 13:: schematische Darstellung einer weiteren alternativen erfindungsgemässen Vorrichtung ohne Befestigungsvorrichtungen.

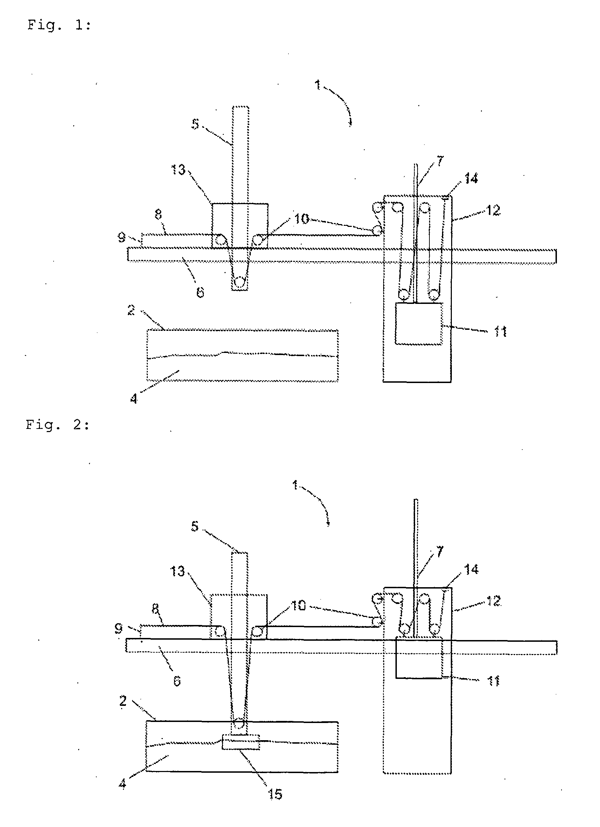

In Figur 1 ist in schematischer Darstellung eine erfindungsgemässe Vorrichtung 1 mit einer Fördereinrichtung 5 gezeigt, die hier als vertikaler Kettenförderer für Schüttgut 4 ausgebildet ist, welches sich in einer Transportvorrichtung 2, hier einem Frachtkahn, befindet.

Die Vorrichtung 1 weist ein Gestell 13 zur Aufnahme und vertikalen Ausrichtung der Fördereinrichtung 5 auf. Die Fördereinrichtung 5 ist an einem Ausleger 6 angebracht und entlang des Auslegers mit dem Gestell 13 positionierbar. Der Ausleger 6 ist mit einem Gehäuse 12 fest verbunden und weder schwenkbar noch rotierbar zum Gehäuse 12.

Zur im Wesentlichen vertikalen Bewegung der Fördereinrichtung 5 weist die erfindungsgemässe Vorrichtung 1 nun ein System aus einer ersten Befestigungsvorrichtung 9 für eine Kraftübertragungseinrichtung 8 - hier ein einstückiges Kabel - auf. Zudem weist die Vorrichtung 1 Kraftumlenkungseinrichtungen 10 auf, die hier als Umlenkrollen ausgebildet sind. Der Übersicht halber wurde nur ein Teil der Umlenkrollen 10 mit diesem Referenzzeichen versehen. Die Vorrichtung weist weiterhin ein Gegengewicht 11 auf, an welchem zwei Umlenkrollen 10 befestigt sind. Das Gegengewicht 11 ist in dem Gehäuse 12 angeordnet und vertikal, d. h. entlang der Längsachse des Gehäuses 12 verschiebbar. Zudem weist das Gehäuse 12 eine zweite Befestigungsvorrichtung 14 zur Befestigung der Kraftübertragungseinrichtung 8 - d. h. dem Kabel - auf.

Die als einstückiges Kabel ausgebildete Kraftübertragungseinrichtung 8 ist somit einerseits mit der ersten Befestigungsvorrichtung 9 verbunden und im Gehäuse mit der zweiten Befestigungsvorrichtung 14. Die Fördereinrichtung 5 ist entlang der durch die Kraftübertragungseinrichtung 8 definierten Richtung zwischen dem Gegengewicht 11 und der ersten Befestigungsvorrichtung 9 angeordnet.

Mittels eines hydraulischen Antriebs 7, der alternativ auch als elektrischer Antrieb ausgebildet sein kann, kann die Position des Gegengewichts 11 im Wesentlichen vertikal positioniert werden, wodurch im Wesentlichen antiparallel dazu die Fördereinrichtung 5 bewegt wird. Mittels dieser Kopplung der Bewegungen des Gegengewichts 11 und der Fördereinrichtung 5 wird also eine vertikale Positionierbarkeit der Fördereinrichtung 5 erreicht, um diese beispielsweise in der Transportvorrichtung 2 zu positionieren, um aus dieser Schüttgut 4 zu fördern.

Das Gegengewicht 11 weist etwa 200% des Gewichts der Fördereinrichtung 5 ohne Schüttgut 4 auf. Entlang der Kraftübertragungseinrichtung 8 ist an den Umlenkrollen 10 und der Lagerung der Fördereinrichtung 5 eine Reibung derart eingestellt, dass ohne äussere Krafteinwirkung beispielsweise mittels des Antriebs 7 die Fördereinrichtung 5 und das Gegengewicht 11 im Wesentlichen in einer festen Position relativ zueinander haltbar sind. Durch die Ausbildung der Kraftübertragungseinrichtung 8 als Flaschenzug, mit dem das Gegengewicht 11 verbunden ist, ist lediglich ein Hub des Antriebs notwendig, der kleiner ist als die maximale vertikale Positionierbarkeit der Fördereinrichtung 5. Durch die Ausbildung des Flaschenzugs mit vier tragenden Kabeln für das Gegengewicht 11 und zwei tragenden Kabeln für die Fördereinrichtung 5 bewirkt somit eine Verschiebung des Gegengewichts 11 um eine Wegstrecke eine Verschiebung der Fördereinrichtung 5 um die doppelte Wegstrecke.

Durch diese Ausgestaltung wird die Positionierung der Fördereinrichtung 5 zur Transporteinrichtung 2 beschleunigt und auch das Nachführen der vertikalen Position der Fördereinrichtung 5 vereinfacht, da ja durch eine Wasserbewegung der Frachtkahn in der vertikalen Position schwanken kann.

Ein Förderer zum Abführen des Schüttguts 4 aus der Fördereinrichtung 5 über den Ausleger 6 ist hier nicht gezeigt.

In Figur 2 ist die Vorrichtung gemäss Figur 1 in einer zweiten Position der Fördereinrichtung 5 dargestellt.

Von hier an und im Folgenden bedeuten gleiche Referenzzeichen gleiche Komponenten in den Figuren.

Im Unterschied zur Vorrichtung 1 gemäss Figur 1 ist die Fördereinrichtung 5 gemäss Figur 2, welche hier eine Förderschnecke 15 zur Förderung von Schüttgut 4 in die Fördereinrichtung 5 aufweist, in einer abgesenkten, d. h. parallel zur Schwerkraft verschobenen Position dargestellt. Das Gegengewicht 11 ist entsprechend im Wesentlichen vertikal antiparallel dazu verschoben. Die im Wesentlichen vertikale Verschiebung der Fördereinrichtung 5 wurde durch im Wesentlichen vertikales Verschieben des Gegengewichts 11 mittels eines hier elektrischen Antriebs 7 bewirkt.

Im Betrieb ist die Fördereinrichtung 5, welche hier als Schneckenförderer ausgebildet ist, mittels der Förderschnecke 15 im Kontakt mit dem Schüttgut 4. Mittels der Förderschnecke 15 wird nun Schüttgut 4 in die Fördereinrichtung 5 gefördert, woraufhin dann das Schüttgut 4 vertikal entlang der Fördereinrichtung 5 gefördert und anschliessend mittels eines nicht gezeigten Förderers aus der Vorrichtung 1 abgeführt wird.

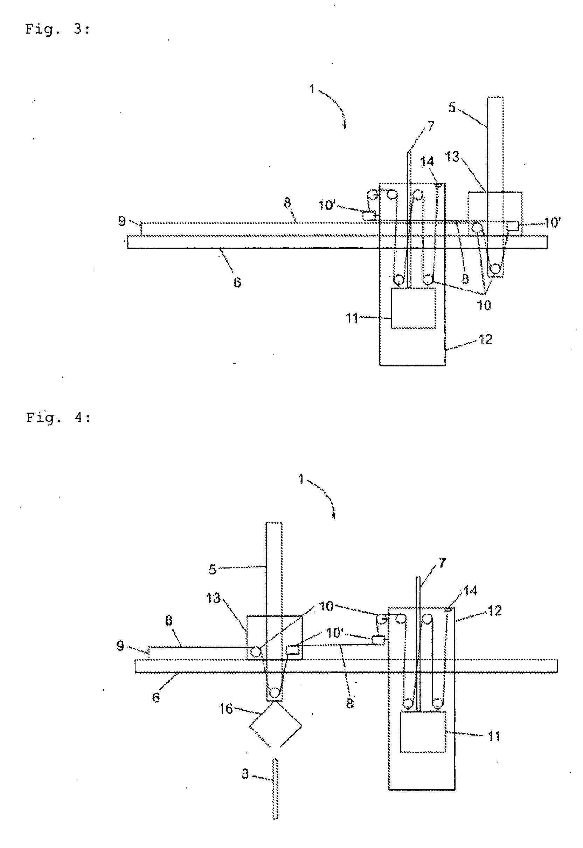

In Figur 3 ist eine alternative erfindungsgemässe Vorrichtung 1 dargestellt. Im Gegensatz zu Figur 1 ist es hier möglich, entlang der gesamten Länge des Auslegers 6 die Fördereinrichtung 5 zu positionieren, d. h. beidseitig des Gehäuses 12.

Hierzu weist die Vorrichtung 1 zusätzlich zu den Umlenkrollen 10 Führungselemente 10' auf, die eine Anpassung der Länge der Kraftübertragungseinrichtung 8 erlauben. Dies ist bei einer Verschiebung der Fördereinrichtung 5 von der der ersten Befestigungsvorrichtung 9 zugewandten Seite zu der der ersten Befestigungsvorrichtung 9 abgewandten Seite am Ausleger 6 notwendig, da die Länge der Kraftübertragungseinrichtung 8 hier variiert.

Die erste Befestigungsvorrichtung 9 ist hier wie in den Figuren 1 und 2 als Haken zum Einhängen der Kraftübertragungseinrichtung 8 ausgebildet. Die Kraftübertragungseinrichtung 8 weist ein entsprechendes Element auf, um dieses am Haken zu befestigen.

Die Führungselemente 10' umfassen eine Einrichtung zur Längenanpassung des Kabels, um die benötigte Länge der Kraftübertragungseinrichtung 8 zu gewährleisten. Im Betrieb zur im Wesentlichen vertikalen Verschiebung der Fördereinrichtung 5 muss diese Möglichkeit der Längenanpassung der Kraftübertragungseinrichtung 8 arretiert werden und die Führungselemente 10' müssen hierzu so ausgebildet sein, dass diese beim Betreiben der Vorrichtung 1 zur im Wesentlichen vertikalen Verschiebung der Fördereinrichtung 5 wie die Umlenkrollen 10 funktionieren.

Die Kraftübertragungseinrichtung 8 ist hier aus Segmenten, d. h. nicht einstückig, ausgebildet.

In Figur 4 ist die Vorrichtung 1 gemäss Figur 3 in einer zweiten Position der Fördereinrichtung 5 entlang des Auslegers 6 dargestellt. Im Unterschied zur Figur 3 weist die Fördereinrichtung 5 einen Greifarm 16 zum Greifen von Stückgut 3 auf.

Der Ausleger 6 ist um die Längsachse des Gehäuses 12 rotativ gelagert, um das Stückgut 4 von der Aufnahmeposition in eine Ablageposition transportieren zu können. Hierzu kann natürlich auch eine Verschiebung der Fördereinrichtung 5 entlang des Auslegers 6 verwendet werden.

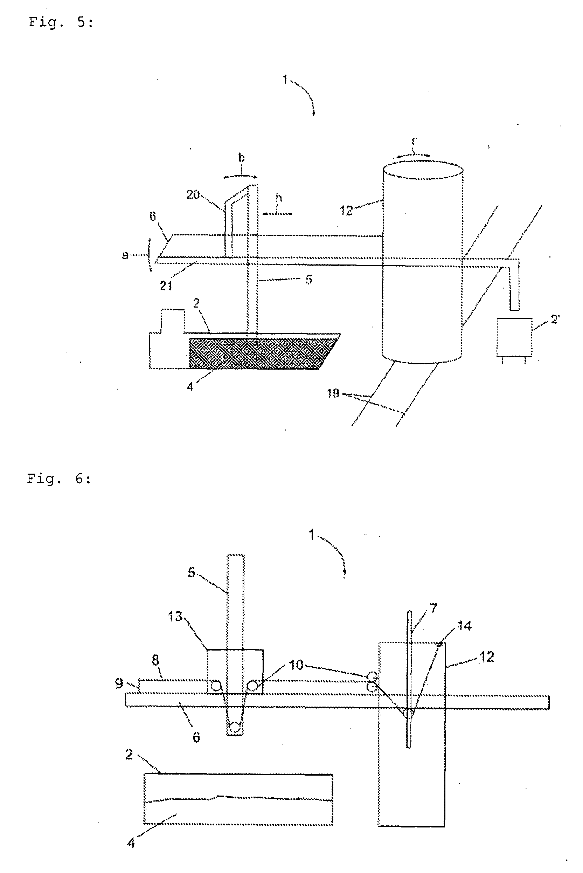

In Figur 5 ist eine Vorrichtung 1 schematisch dargestellt. Die Fördereinrichtung 5 ist wie in Figur 1 ausgebildet und im Wesentlichen vertikal verschiebbar mit dem zur Figur 1 erläuterten Mechanismus.

Die Fördereinrichtung 5, die als vertikaler Kettenförderer ausgebildet ist und eine hier nicht gezeigte Förderschnecke wie in Figur 2 aufweist, befindet sich in einer abgesenkten Position zur Förderung von Schüttgut 4 aus der Transportvorrichtung 2, einem Schiff, in einen Lastwagen 2'. Hierzu wird Schüttgut 4 mittels der Fördereinrichtung 5 in eine Abfuhrleitung 20 gefördert, die mit einem Förderer 21 verbunden ist, um das Schüttgut 4 entlang des Förderers 21 in den Lastwagen 2' zu fördern. Die Abfuhrleitung 20 ist als teleskopische Leitung ausgebildet, um die Verbindung zum Transport des Schüttguts zwischen der Fördereinrichtung 5 und dem Förderer 21 bei einer im Wesentlichen vertikalen Verschiebung der Fördereinrichtung 5 gewährleisten zu können.

Für eine maximale Flexibilität, um auch schwer zugängliche Frachträume mit der Fördereinrichtung erreichen zu können, ist der Ausleger 6 entlang der mit a gekennzeichneten Richtung um die Längsachse des Gehäuses 12 verschwenkbar. Die Fördereinrichtung 5 ist gemäss dem Pfeil h entlang des Auslegers verschiebbar und entlang der Richtung gemäss Pfeil b verschwenkbar bezüglich der Längsachse der Fördereinrichtung 5. Durch die Ausbildung der Abfuhrleitung 20 als teleskopische Leitung kann diese eine derartige Verschwenkung ausgleichen und den Transport des Schüttguts 4 in den Förderer 21 gewährleisten. Bei einer Verschiebung der Fördereinrichtung 5 entlang des Auslegers 6 wird auch die Abfuhrleitung 20 mit der Fördereinrichtung 5 entlang der Richtung h mitbewegt.

Der Ausleger 6 ist um das Gehäuse 12 rotativ gelagert entlang der Richtung r. Das Gehäuse ist auf Schienen 19 gelagert, um eine translatorische Bewegung des Gehäuses erreichen zu können.

Alternativ zu der Verwendung von Schienen 19 ist auch die Verwendung von Rädern möglich.

In Figur 6 ist eine Vorrichtung 1 in einer ersten Position im Wesentlichen gemäss Figur 1 dargestellt. Die Vorrichtung 1 weist jedoch kein Gegenwicht auf.

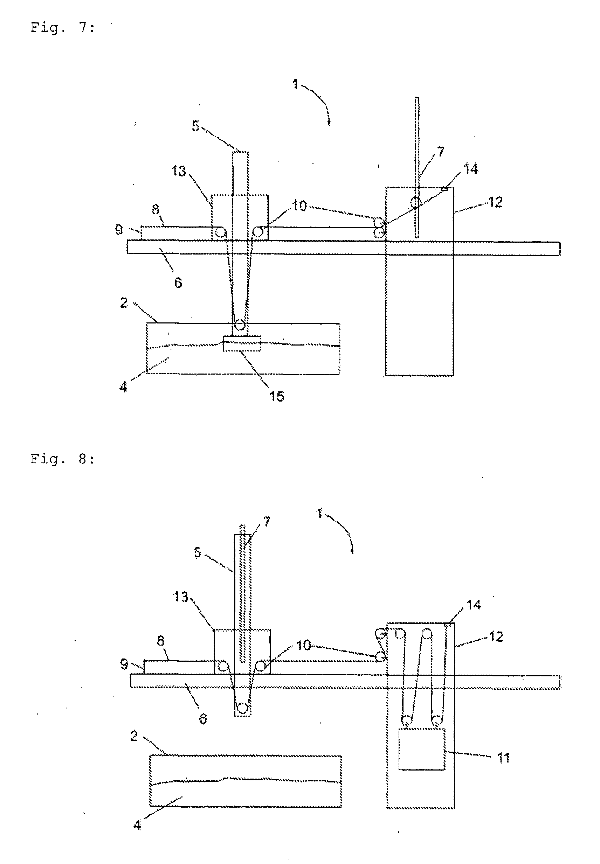

In Figur 7 ist die Vorrichtung 1 gemäss Figur 6 in einer zweiten Position dargestellt. Hier weist die Fördereinrichtung 5 eine Förderschnecke 15 zur Förderung von Schüttgut 4 auf.

In Figur 8 ist eine erfindungsgemässe Vorrichtung gemäss Figur 1 dargestellt. Im Unterschied zu Figur 1 ist hier jedoch der Antrieb 7 an der Fördereinrichtung 5 angeordnet.

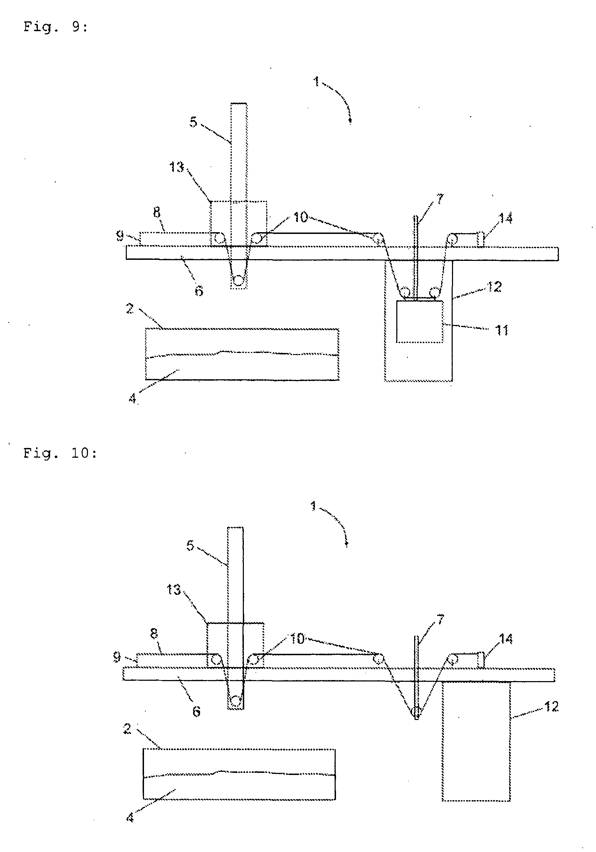

In Figur 9 ist eine erfindungsgemässe Vorrichtung gemäss Figur 1 dargestellt. Im Unterschied zu Figur 1 ist hier jedoch die zweite Befestigungsvorrichtung 14 am Ausleger 6 angebracht. Der Ausleger 6 ist am Gehäuse 12 angeordnet.

In Figur 10 ist eine Vorrichtung 1 dargestellt, wobei der Antrieb 7 sowie die zweite Befestigungsvorrichtung 14 am Ausleger 6 angeordnet sind. Der Ausleger 6 ist am Gehäuse 12 angeordnet.

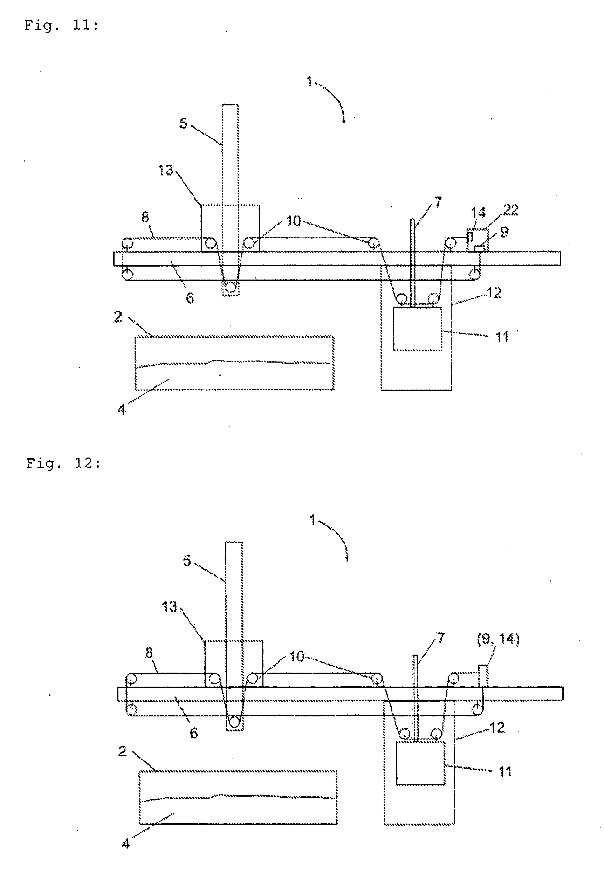

In Figur 11 ist eine alternative erfindungsgemässe Vorrichtung 1 dargestellt mit einem Befestigungsgehäuse 22. Die erste Befestigungsvorrichtung 9 und die zweite Befestigungsvorrichtung 14 sind in dem Befestigungsgehäuse 22 angeordnet, welches am Ausleger 6 angeordnet ist. Die Kraftübertragungseinrichtung 8 ist im Wesentlichen schlaufenförmig ausgebildet.

In Figur 12 ist eine erfindungsgemässe Vorrichtung 1 gemäss Figur 11 dargestellt. Im Unterschied zur Figur 11 weist hier die Vorrichtung 1 kein Befestigungsgehäuse auf. Die Vorrichtung weist genau eine gemeinsame Befestigungsvorrichtung 9, 14 auf.

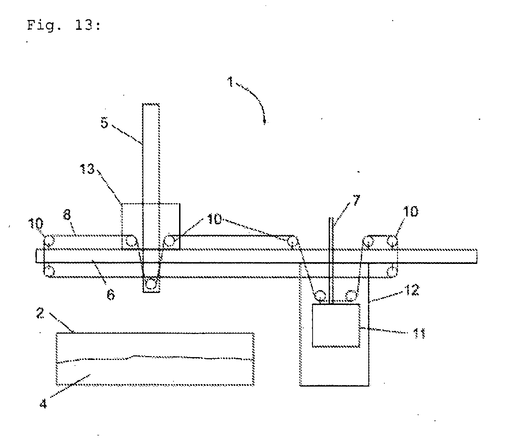

In Figur 13 ist eine alternative erfindungsgemässe Vorrichtung 1 dargestellt ohne Befestigungsvorrichtung. Anstelle der Befestigungsvorrichtungen gemäss Figur 10 weist die Vorrichtung 1 zusätzliche Kraftumlenkungseinrichtungen 10, hier Umlenkrollen, auf. Dadurch wird eine schlaufenförmige, geschlossene Kraftübertragungseinrichtung 8 gebildet.

## Patentansprüche

1. Vorrichtung (1) zur Förderung von Stückgut (3) und/oder Schüttgut (4) aus und/oder in eine Transportvorrichtung (2), insbesondere ein Schiff, umfassend einen Ausleger (6) mit einer zumindest im Wesentlichen vertikal beweglich gelagerten Fördereinrichtung (5) zur Förderung des Stückguts (3) und/oder des Schüttguts (4), einen Antrieb (7) zur im Wesentlichen vertikalen Bewegung der Fördereinrichtung (5) und eine Kraftübertragungseinrichtung (8), wobei die Vorrichtung (1) eine erste Befestigungsvorrichtung (9) und eine zweite Befestigungsvorrichtung (14) und / oder zumindest eine erste und eine zweite Kraftumlenkungseinrichtung (10) oder beliebige Kombinationen daraus für die Kraftüberträgungseinrichtung (8) aufweist, wobei die Fördereinrichtung (5) und der Antrieb (7) bei bestimmungsgemässem Gebrauch bezogen auf zumindest eine entlang der Kraftübertragungseinrichtung (8) definierte Richtung zwischen der ersten Befestigungsvorrichtung (9) und der zweiten Befestigungsvorrichtung (14) und / oder zwischen der ersten ünd der zweiten Kraftumlenkungseinrichtung (10) oder beliebige Kombinationen daraus angeordnet sind und wobei die Kraftübertragungseinrichtung (8) derart ausgebildet ist, dass zumindest mittels des Antriebs (7) die Fördereinrichtung (5) im Wesentlichen vertikal bewegbar ist, **dadurch gekennzeichnet, dass** die Vorrichtung (1) ein zumindest im Wesentlichen vertikal beweglich gelagertes Gegengewicht (11) umfasst, welches mit dem Antrieb (7) verbunden ist und / oder zwischen der ersten Befestigungsvorrichtung (9) und der zweiten Befestigungsvorrichtung (14) und / oder zwischen der ersten und der zweiten Kraftumlenkungseinrichtung (10) oder beliebigen Kombinationen daraus angeordnet ist wobei das Gegengewicht (11) bei bestimmungsgemässem Gebrauch insbesondere im Wesentlichen vertikal entgegengesetzt zur Fördereinrichtung (5) bewegbar ist.

2. Vorrichtung (1) gemäss Anspruch 1, **dadurch gekennzeichnet, dass** die Kraftübertragungseinrichtung (8) als zumindest ein Kabel, ein Seil, eine Kette oder Kombinationen daraus mit Führungselementen, insbesondere Führungsrollen und/oder Umlenkrollen, ausgebildet ist.

3. Vorrichtung (1) gemäss einem der Ansprüche 1 bis 2, **dadurch gekennzeichnet, dass** zumindest eine der folgenden Komponenten an und/oder in einem Gehäuse (12) befestigt sind: Ausleger (6), Antrieb (7), erste Befestigungsvorrichtung (9), zweite Befestigungsvorrichtung (14), Kraftumlenkungseinrichtung(en) (10).

4. Vorrichtung (1) gemäss einem der Ansprüche 1 bis 2, **dadurch gekennzeichnet, dass** der Antrieb (7) an und/oder in der Fördereinrichtung (5) angeordnet ist.

5. Vorrichtung gemäss einem der Ansprüche 1-4, **dadurch gekennzeichnet, dass** das Gegengewicht (11) an und/oder in dem Gehäuse (12) angeordnet ist und insbesondere in dem Gehäuse (12) vertikal bewegbar ist.

6. Vorrichtung (1) gemäss einem der Ansprüche 1 bis 5, **dadurch gekennzeichnet, dass** der Ausleger (6) horizontal rotierbar und/oder vertikal schwenkbar ist.

7. Vorrichtung (1) gemäss einem der Ansprüche 1 bis 6, **dadurch gekennzeichnet, dass** die Fördereinrichtung (5) entlang dem Ausleger (6) positionierbar ist.

8. Vorrichtung (1) gemäss einem der Ansprüche 1 bis 7, **dadurch gekennzeichnet, dass** die Vorrichtung (1) beweglich gelagert ist zur Positionierung relativ zur Transportvorrichtung (2) .

9. Vorrichtung (1) gemäss einem der Ansprüche 1 bis 8, **dadurch gekennzeichnet, dass** die Fördereinrichtung (5) zumindest eine der folgenden Einrichtungen umfasst: Kettenförderer, Gurtförderer, Schneckenförderer, Becherförderer, Pneumatikförderer, Greifeinrichtung.

10. Vorrichtung (1) gemäss einem der Ansprüche 1 bis 9, **dadurch gekennzeichnet, dass** die Fördereinrichtung (5) zumindest eine Förderschnecke (15) zur Förderung von Schüttgut (4) aufweist, welche insbesondere bei bestimmungsgemässem Gebrauch auf der der Transportvorrichtung (2) zugewandten Seite angeordnet ist.

11. Vorrichtung (1) gemäss einem der Ansprüche 1 bis 10, **dadurch gekennzeichnet, dass** die Vorrichtung (1) eine Förderleitung (20) zur Abfuhr und/oder Zufuhr von Schüttgut (4) in und/oder aus der Fördereinrichtung (5) aufweist, wobei die Förderleitung (20) insbesondere als teleskopische Leitung ausgebildet ist.

12. Vorrichtung (1) gemäss einem der Ansprüche 1 bis 11, **dadurch gekennzeichnet, dass** die Vorrichtung (1) einen Förderer (21) aufweist zur Abfuhr und/oder Zufuhr von Schüttgut (4) in und/oder aus der Förderleitung (20).

13. Verfahren zur Förderung von Stückgut (3) und/oder Schüttgut (4) aus und/oder in eine Transportvorrichtung (2) mittels einer Vorrichtung gemäss einem der Ansprüche 1 bis 12, umfassend die folgenden Schritte:
- Bereitstellen der Vorrichtung (1) umfassend einen Ausleger (6) mit einer zumindest im Wesentlichen vertikal beweglich gelagerten Fördereinrichtung (5) zur Förderung des Stückguts (3) und/oder des Schüttguts (4), einen Antrieb (7) zur im Wesentlichen vertikalen Bewegung der Fördereinrichtung (5) und eine Kraftübertragungseinrichtung (8), wobei die Vorrichtung (1) eine erste Befestigungsvorrichtung (9) und eine zweite Befestigungsvorrichtung (14) und / oder zumindest eine erste und eine zweite Kraftumlenkungseinrichtung (10) oder beliebige Kombinationen daraus für die Kraftübertragungseinrichtung (8) aufweist, und wobei die Fördereinrichtung (5) und der Antrieb (7) bei bestimmungsgemässem Gebrauch bezogen auf zumindest eine entlang der Kraftübertragungseinrichtung (8) definierten Richtung zwischen der ersten Befestigungsvorrichtung (9) und der zweiten Befestigungsvorrichtung (14) und / oder zwischen der ersten und der zweiten Kraftumlenkungseinrichtung (10) oder beliebige Kombinationen daraus angeordnet sind;
- Positionieren der Fördereinrichtung (5) im Wesentlichen vertikal mittels des Antriebs (7) relativ zur Transportvorrichtung (2) zur Förderung;
- Fördern von Stückgut (3) und/oder Schüttgut (4) aus und/oder in die Transportvorrichtung (2).

14. Verfahren gemäss Anspruch 13, **dadurch gekennzeichnet, dass** die Vorrichtung (1) ein zumindest im Wesentlichen vertikal beweglich gelagertes Gegengewicht (11) umfasst, welches mit dem Antrieb (7) verbunden ist und / oder zwischen der ersten Befestigungsvorrichtung (9) und der zweiten Befestigungsvorrichtung (14) und / oder zwischen der ersten und der zweiten Kraftumlenkungseinrichtung (10) oder beliebigen Kombinationen daraus angeordnet ist, wobei das Gegengewicht (11) mittels des Antriebs (7) bei bestimmungsgemässem Gebrauch im Wesentlichen vertikal entgegengesetzt zur Fördereinrichtung (5) bewegt wird während der Positionierung der Fördereinrichtung (5).

## Claims

1. Device (1) for conveying packaged goods (3) and/or bulk goods (4) from and/or into a transport device (2), more particularly a ship, comprising a boom (6) with an at least substantially vertically movably mounted conveying unit (5) for conveying the packaged goods (3) and/or the bulk goods (4), a drive (7) for the substantially vertical movement of the conveying unit (5) and a force transmission unit (8), wherein the device (1) has a first fastening device (9) and a second fastening device (14) and/or at least one first and one second force deflection unit (10) or arbitrary combinations thereof for the force transmission unit (8), wherein the conveying unit (5) and the drive (7) are arranged between the first fastening device (9) and the second fastening device (14) and/or between the first and the second force deflection unit (10) or arbitrary combinations thereof with the use as intended in relation to at least one direction defined along the force transmission unit (8), and wherein the force transmission unit (8) is designed so that the conveying unit (5) is movable substantially vertically at least by means of the drive (7), **characterised in that** the device (1) comprises an at least substantially vertically movably mounted counterweight (11) which is connected to the drive (7) and /or is mounted between the first fastening device (9) and the second fastening device (14) and/or between the first and the second force deflection unit (10) or arbitrary combinations thereof, wherein the counterweight (11) is movable in particular substantially vertically opposite the conveying unit (5) with the use as intended.

2. Device (1) according to Claim 1 **characterised in that** the force transmission unit (8) is formed as at least one cable, a rope, a chain or combinations thereof with guide elements, more particularly guide rollers and/or guide pulleys.

3. Device (1) according to one of Claims 1 to 2 **characterised in that** at least one of the following components is fastened on and/or in a housing (12): boom (6), drive (7), first fastening device (9), second fastening device (14), force deflection unit(s) (10).

4. Device (1) according to one of Claims 1 to 2 **characterised in that** the drive (7) is mounted on and/or in the conveying unit (5).

5. Device according to one of Claims 1-4 **characterised in that** the counterweight (11) is mounted on and/or in the housing (12) and is in particular vertically movable in the housing (12).

6. Device (1) according to one of Claims 1 to 5 **characterised in that** the boom (6) is horizontally rotatable and/or vertically pivotal.

7. Device (1) according to one of Claims 1 to 6 **characterised in that** the conveying unit (5) can be positioned along the boom (6).

8. Device (1) according to one of Claims 1 to 7 **characterised in that** the device (1) is mounted movable for positioning relative to the transport device (2).

9. Device (1) according to one of Claims 1 to 8 **characterised in that** the conveying unit (5) comprises at least one of the following devices: chain conveyor, belt conveyor, screw conveyor, bucket conveyor, pneumatic conveyor, grab unit.

10. Device (1) according to one of Claims 1 to 9 **characterised in that** the conveying unit (5) has a least one conveyor screw (15) for conveying bulk goods (4) which particularly with the use as intended is mounted on the side facing the transport device (2).

11. Device (1) according to one of Claims 1 to 10 **characterised in that** the device (1) has a conveyor line (20) for discharging and/or supplying the bulk goods (4) into and/or out from the conveying unit (5) wherein the conveyor line (20) is designed more particularly as a telescopic pipeline.

12. Device (1) according to one of Claims 1 to 11 **characterised in that** the device (1) has a conveyor (21) for discharging and/or supplying bulk goods (4) into and/or out from the conveyor line (20).

13. Method for conveying packaged goods (3) and/or bulk goods (4) from and/or into a transport device (2) by means of a device according to one of Claims 1 to 12, comprising the following steps:
- setting up the device (1) comprising a boom (6) with an at least substantially vertically movably mounted conveying unit (5) for conveying the packaged goods (3) and/or the bulk goods (4), a drive (7) for moving the conveying unit (5) substantially vertically and a force transmission unit (8), wherein the device (1) has a first fastening device (9) and a second fastening device (14) and/or at least one first and a second force deflection unit (10) or arbitrary combinations thereof for the force transmission unit (8), and wherein the conveying unit (5) and the drive (7) are mounted between the first fastening device (9) and the second fastening device (14) and/or between the first and the second force deflection unit (10) or arbitrary combinations thereof with the use as intended in relation to at least a direction defined along the force transmission unit (8);
- positioning the conveying unit (5) substantially vertically by means of the drive (7) relative to the transport device (2) for conveying;
- conveying the packaged goods (3) and/or bulk goods (4) from and/or into the transport device (2) .

14. Method according to Claim 13 **characterised in that** the device (1) comprises an at least substantially vertically movably mounted counterweight (11) which is connected to the drive (7) and/or is mounted between the first fastening device (9) and the second fastening device (14) and/or between the first and the second force deflection unit (10) or arbitrary combinations thereof, wherein the counterweight (11) is moved by means of the drive (7) with the use as intended substantially vertically opposite the conveying unit (5) during the positioning of the conveying unit (5).

## Revendications

1. Dispositif (1) pour le transport de marchandises au détail (3) et/ou de marchandises en vrac (4) hors de et/ou dans un dispositif de transport (2), en particulier un bateau, comprenant une flèche (6) avec un système de transport (5) monté de façon mobile au moins essentiellement en direction verticale pour le transport des marchandises au détail (3) et/ou des marchandises en vrac (4), un entraînement (7) pour le mouvement essentiellement vertical du système de transport (5) et un système de transmission de force (8), dans lequel le dispositif (1) présente un premier dispositif de fixation (9) et un deuxième dispositif de fixation (14) et/ou au moins un premier et un deuxième dispositif de déviation de force (10) ou des combinaisons quelconques de ceux-ci pour le système de transmission de force (8), dans lequel le système de transport (5) et l'entraînement (7) sont disposés, en situation d'utilisation conforme aux prescriptions et par rapport à au moins une direction définie le long du système de transmission de force (8), entre le premier dispositif de fixation (9) et le deuxième dispositif de fixation (14) et/ou entre le premier et le deuxième dispositif de déviation de force (10) ou des combinaisons quelconques de ceux-ci, et dans lequel le système de transmission de force (8) est réalisé de telle manière que le système de transport (5) soit déplaçable essentiellement en direction verticale au moins au moyen de l'entraînement (7), **caractérisé en ce que** le dispositif (1) comprend un contrepoids (11) monté de façon mobile au moins essentiellement en direction verticale, qui est relié à l'entraînement (7) et/ou qui est disposé entre le premier dispositif de fixation (9) et le deuxième dispositif de fixation (14) et/ou entre le premier et le deuxième dispositif de déviation de force (10) ou des combinaisons quelconques de ceux-ci, dans lequel le contrepoids (11) est déplaçable, en situation d'utilisation conforme aux prescriptions, en particulier essentiellement en direction verticale en sens contraire du système de transport (5).

2. Dispositif (1) selon la revendication 1, **caractérisé en ce que** le système de transmission de force (8) est réalisé sous la forme d'au moins un câble, une corde, une chaîne ou des combinaisons de ceux-ci avec des éléments de guidage, en particulier des poulies de guidage et/ou des poulies de renvoi.

3. Dispositif (1) selon l'une quelconque des revendications 1 à 2, **caractérisé en ce qu'**au moins un des composants suivants est fixé à et/ou dans une enceinte (12) : flèche (6), entraînement (7), premier dispositif de fixation (9), deuxième dispositif de fixation (14), dispositif(s) de déviation de force (10).

4. Dispositif (1) selon l'une quelconque des revendications 1 à 2, **caractérisé en ce que** l'entraînement (7) est disposé sur et/ou dans le système de transport (5).

5. Dispositif selon l'une quelconque des revendications 1 à 4, **caractérisé en ce que** le contrepoids (11) est disposé sur et/ou dans l'enceinte (12) et est en particulier déplaçable verticalement dans l'enceinte (12).

6. Dispositif (1) selon l'une quelconque des revendications 1 à 5, **caractérisé en ce que** la flèche (6) peut tourner horizontalement et/ou pivoter verticalement.

7. Dispositif (1) selon l'une quelconque des revendications 1 à 6, **caractérisé en ce que** le système de transport (5) peut être positionné le long de la flèche (6).

8. Dispositif (1) selon l'une quelconque des revendications 1 à 7, **caractérisé en ce que** le dispositif (1) est monté de façon mobile en vue de son positionnement par rapport au dispositif de transport (2).

9. Dispositif (1) selon l'une quelconque des revendications 1 à 8, **caractérisé en ce que** le système de transport (5) comprend au moins un des systèmes suivants: transporteur à chaîne, transporteur à courroie, transporteur à vis, transporteur à godets, transporteur pneumatique, système à grappin.

10. Dispositif (1) selon l'une quelconque des revendications 1 à 9, **caractérisé en ce que** le système de transport (5) présente au moins une vis transporteuse (15) pour le transport de marchandises en vrac (4), qui est disposée sur la côté tourné vers le dispositif de transport (2), en particulier en situation d'utilisation conforme aux prescriptions.

11. Dispositif (1) selon l'une quelconque des revendications 1 à 10, **caractérisé en ce que** le dispositif (1) présente une conduite de transport (20) pour l'évacuation et/ou l'apport de marchandises en vrac (4) dans et/ou hors du système de transport (5), dans lequel la conduite de transport (20) est réalisée en particulier comme une conduite télescopique.

12. Dispositif (1) selon l'une quelconque des revendications 1 à 11, **caractérisé en ce que** le dispositif (1) présente un transporteur (21) pour l'évacuation et/ou l'apport de marchandises en vrac (4) dans et/ou hors de la conduite de transport (20).

13. Procédé pour le transport de marchandises au détail (3) et/ou de marchandises en vrac (4) hors de et/ou dans un dispositif de transport (2) au moyen d'un dispositif selon l'une quelconque des revendications 1 à 12, comprenant les étapes suivantes:
- préparer le dispositif (1) comprenant une flèche (6) avec un système de transport (5) monté de façon mobile au moins essentiellement en direction verticale pour le transport des marchandises au détail (3) et/ou des marchandises en vrac (4), un entraînement (7) pour le mouvement essentiellement vertical du système de transport (5) et un système de transmission de force (8), dans lequel le dispositif (1) présente un premier dispositif de fixation (9) et un deuxième dispositif de fixation (14) et/ou au moins un premier et un deuxième dispositif de déviation de force (10) ou des combinaisons quelconques de ceux-ci pour le système de transmission de force (8), et dans lequel le système de transport (5) et l'entraînement (7) sont disposés, en situation d'utilisation conforme aux prescriptions et par rapport à au moins une direction définie le long du système de transmission de force (8), entre le premier dispositif de fixation (9) et le deuxième dispositif de fixation (14) et/ou entre le premier et le deuxième dispositif de déviation de force (10) ou des combinaisons quelconques de ceux-ci;
- positionner le système de transport (5) essentiellement en direction verticale au moyen de l'entraînement (7) par rapport au dispositif de transport (2) en vue du transport;
- transporter des marchandises au détail (3) et/ou des marchandises en vrac (4) hors du et/ou dans le dispositif de transport (2).

14. Procédé selon la revendication 13, **caractérisé en ce que** le dispositif (1) comprend un contrepoids (11) monté de façon mobile au moins essentiellement en direction verticale, qui est relié à l'entraînement (7) et/ou qui est disposé entre le premier dispositif de fixation (9) et le deuxième dispositif de fixation (14) et/ou entre le premier et le deuxième dispositif de déviation de force (10) ou des combinaisons quelconques de ceux-ci, dans lequel on déplace le contrepoids (11) au moyen de l'entraînement (7), en situation d'utilisation conforme aux prescriptions, essentiellement en direction verticale en sens contraire du système de transport (5) pendant le positionnement du système de transport (5).
